# EUROPEAN PATENT SPECIFICATION

(11) **EP 1 199 898 B1**
(45) Date of publication and mention of the grant of the patent: **12.12.2007**
(21) Application number: 00710026.6
(22) Date of filing: 18.10.2000
(51) Int. Cl.: H04N 9/82

(54) **Method for automatically identifying or recognising a recorded video sequence**
Verfahren zur automatischen Identifizierung oder Erkennung einer aufgenommenen Videosequenz
Procédé d'identification et de reconnaissance automatique d'une séquence vidéo enregistrée

(43) Date of publication of application: 24.04.2002
(73) Proprietor: Thomson Licensing, 92648 Boulogne Cedex (FR)
(72) Inventor: Winter, Marco, 30173 Hannover (DE)
(74) Representative: Hartnack, Wolfgang

(56) References cited:
- EP-A- 0 737 008
- EP-A- 0 838 820
- WO-A-95/28783
- US-A- 6 009 233

## Description

The invention relates to a method for data recognition in a recording device.

### Background

Recording devices are used for recording video data, especially movies, live shows et cetera. Such devices are usually referred to as video recorder (VCR) and allow on one tape storage of several sets of video data related to different movies or shows.

EP-A-0838820 and EP-A-0737008 disclose methods wherein video data and sequences are stored in a data base together with attribute information serving for identifying particular sequences for a later retrieval.

### Invention

The user of the recording device may wish to automatically add some specific information to the recorded video data and to store said specific information such that it is assigned to the recorded data. In such case, for example, it is necessary to identify or recognise the video data recorded on the storage means.
Beyond such application, there is also a general need for video data identification or recognition. Such video data recognition makes feasible recording devices that are more convenient for use.

A problem to be solved by the invention is to disclose an improved way of identifying or recognising video sequence data for automatically providing related additional information. This problem is solved by the methods disclosed in claims 1 to 3.

The invention includes the basic idea of generating a set of mean values derived from video data, e.g. luminance brightness mean values, and of using this set of mean values for automatic video data recognition or identification. Therefore, video data itself is used for providing parameters that can be used for recognition or identification.

Advantageously, no additional identification data need to be integrated into a video data file and/or to be transmitted and/or to be stored together with the video data.

Another advantage of the invention is that brightness mean values of video data are quite insensitive to noise that could be introduced by channel transfer between the program source and the recording device. Therefore, the likelihood of having noisy luminance values among the received video data on the recording device side is rather low. That facilitates video data identification or recognition by means of the set of luminance brightness mean values.

A further advantage is that with minor efforts only the luminance brightness mean values can be calculated from the luminance pixel values of the stored video data.

In principle, the invention is suited for automatically identifying or recognising a recorded video sequence and for automatically providing additional information related to said recorded video sequence, the invention including the steps:
- generating in a recording device from data of said recorded video sequence a set of mean values that are characteristic for frames or fields of said recorded video sequence;
- sending said set of mean values from said recording device to server means;
- comparing in said server means the received set of mean values with corresponding data derived from video sequences known at server means side;
- upon identifying or recognising said set of mean values as belonging to a specific one of said known video sequences, sending additional data that are stored in said server means and that are related to the identified or recognised recorded video sequence from said server means to said recording device;
- storing, using said recording device, said additional data in connection with said recorded video sequence.

Advantageous features of the invention are disclosed in the dependent claims.

### Drawings

Exemplary embodiments of the invention are described with reference to the accompanying drawings, which show in:
Fig. 1 schematic block diagram of an arrangement comprising a recording device and server means;
Fig. 2 schematic representation of video data frames recorded in the recording device and the server means, respectively.

### Exemplary embodiments

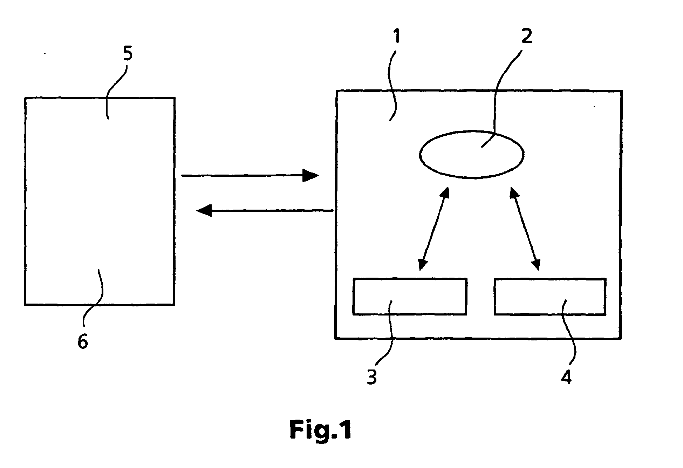

Referring to figure 1, a server device 1 includes controlling means 2 and a title archive 3 for titles of sets of video data stored in a program archive 4. The sets of video data represent recorded movies or TV-shows, for example. A single set of video data or several sets of video data can be transmitted from the server device 1, or from a TV station, to a recording device 5, e.g. video recorder or an optical recorder. The sets of video data transmitted to the recording device 5 are stored on storage means 6, e.g. a video cassette or a DVD (digital versatile disc).

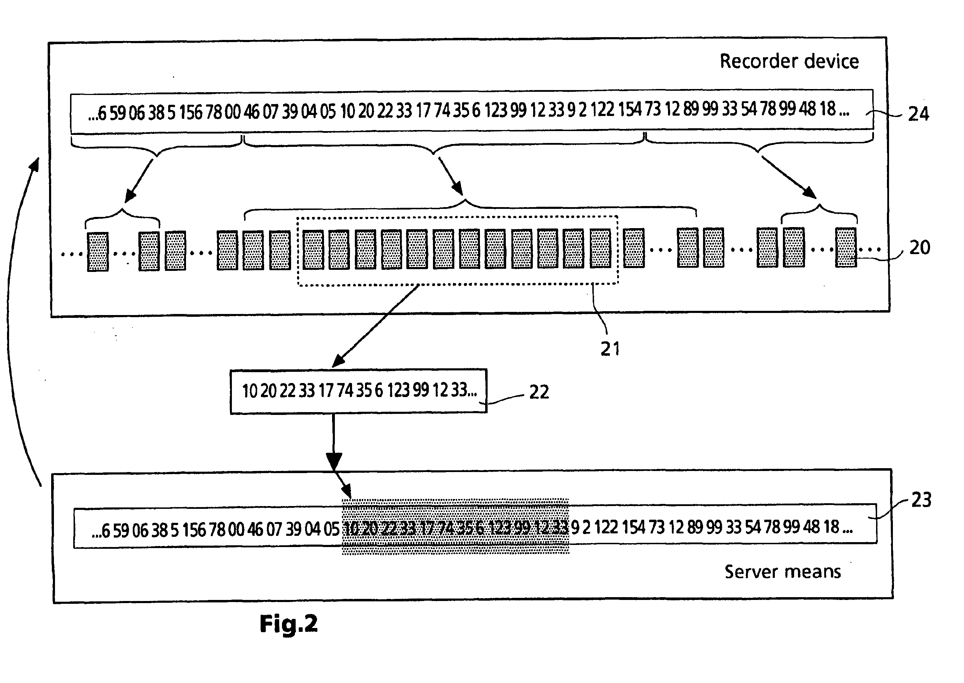

Referring to figure 1 and 2, a first embodiment is described. A set of video data 20 depicted in Fig. 2, e.g. a movie, is sent from a TV station or from the server device 1 or from any other video sequence source to the recording device 5 for recording. The set of video data 20 is transferred and stored on a frame-by-frame or field-by-field basis.
Automatically or at any time after the recording, a user of the recording device 5 wants to store additional information relating to the recorded set of video data, e.g. a title, a start time and an end time of the movie comprised in the set of video data 20. The recording device 5 analyses e.g. four single frames or fields or units or pieces 21 out of a e.g. hundred consecutive frames or fields of the stored set of video data 20 in order to send corresponding analysis result values to the server device 1. The temporal locations of these pieces 21 are spread over the recorded whole set of video data 20.

For each analysed frame or field or unit or piece e.g. a single byte for a mean value is calculated from the pixel values of a frame or a field or a unit/piece, and can be stored intermediately. The piece or unit may include several frames or fields or may consist of parts of frames or fields. The active part of a frame includes e.g. 720 pixels horizontally and 576 pixels vertically in a 50 Hz TV standard (*480 pixels in a 60 Hz TV standard*). A luminance brightness mean value for a frame is then the average brightness value of the 720*576 luminance pixel vales. Preferably in the evaluation the pixel values of the upper half only of a frame or field are used for calculating one of the mean values, in order to avoid an impact on the result byte due to a subset of video data that could be inserted into the video data 20 like e.g. in a PIP (picture-in-picture) or subtitle/closed-caption representation. That byte is for instance the brightness mean value of the luminance pixels of the visible upper half part of the whole frame. As an alternative, or in combination, chrominance saturation mean values of one or both colour components can be used. As another alternative, field mean values instead of frame mean values can be used, thereby performing field analysis instead of frame analysis. Any combination of these features can be used.

As a result, a set 22 of e.g. 4*100 = 400 bytes is collected for the current video sequence recorded. Thereafter this set 22 of mean values is sent to the server device 1.
For identifying a movie it is sufficient to select some few frames only together with their temporal location for collecting a sufficient number of brightness mean values, thereby achieving a mean value data compression. If the temporal distances of such selected frames do have a fixed value, e.g. every tenth or every fiftieth frame or field, it is not necessary to transmit the frame or field distance values.
It is to be understood that the number of frames or fields analysed for providing the mean values 22 may be different for different applications. In any case, the analysed frames or pieces 21 should be spread over the whole sequence or movie in order to increase the probability of including frames from at least one group of consecutive frames of the movie or set of video data 20, i.e. not from an intermediate advertisement scene or from the end or the start of another movie/set of video data heading or following the movie/set of video data to be evaluated and identified.
Advantageously, the temporal locations of the frames or pieces 21 should be selected such that the values of the mean value bytes change seriously during one piece of consecutive frames in order to get a more characteristic pattern of luminance brightness mean values. This will help to avoid that video data with essentially no specific meaning (like a black screen content over several seconds) are used for generating the set of luminance brightness mean values.

The set 22 of mean values represents a characteristic byte pattern for the analysed set of video data 20, and is then automatically sent to the server means 1 via an ISDN or analog telephone line, for example. The server means 1 automatically compare the received set of mean values 22 with corresponding mean value data 23 stored in its program archive 4.
There is no need for a 100% match between the bytes of the mean value set 22 generated in the recording device 5 and the mean value bytes 23 stored in the program archive 4. A non-linear channel or non-perfect clamping during the transmission or transfer between the video sequence provider or TV program signal source and recording device 5 may cause small deviations in brightness and/or chrominance saturation and thereby in the mean value byte sequence derived therefrom. E.g. a mean value byte sequence '5, 88, 34, 92' calculated in the recorder from a received video signal is different but still similar to the mean value byte sequence '5, 87, 35, 93' stored in the server means 1. Known data match correlating methods may be used to identify these mean value sequences as representing an identical movie or video sequence.

In case the server means 1 recognise the set of video data 20 characterised by the set of mean values 22 received from the recording device 5, it automatically sends data in return like the title, the name of the director and the producer of the movie back and/or original timestamps to the recording device.

Additionally, the server means 1 can thereafter automatically (generate and) send a complete set of e.g. luminance brightness mean value bytes 24 for the identified video data sequence, e.g. a movie, to the recording device 5, i.e. one mean value byte for each frame or field. This complete set of mean values is then used in the recording device to determine the exact begin and end and/or breaks of the recorded video sequence, by comparing it with the corresponding mean values of the recorded video sequence.
If the set of video data 20 is a movie having a length of e.g. one hour and 30 minutes, the complete number of frames would be 135000 for 50 Hz interlaced TV and 162000 for 60 Hz interlaced TV. An ISDN link would need only about 20 seconds to transmit this number of bytes. Therefore, known ISDN devices are able to perform the transmission of the complete set of mean values 22 with low cost. Even an analog phone link modem would need less than one minute for the transmission.

If the server means 1 do not find a match between the corresponding mean value bytes, it can automatically send to the recording device 5 a request for further pieces of the set of video data 20 to be identified. If further matching operations are still not successful, the server means may send a message like "can't identify the movie" to the recording device 5.

The invention described works well without any user control, i.e. the identification or recognition of the set of video data 20, the title etc. sending and the begin, end and break determination in the recording device can be performed automatically without any support by the user.

The title archive 3 and the program archive 4 in the server means should be updated with corresponding data for all new sets of video data broadcast, e.g. movies or shows. Even TV news could be archived. That will not occupy much storage space: for example (25(*30*)byte/s⁻¹)*(3600s/h)*24h = 2.16 Mbytes for 50Hz TV (*2.59 Mbytes for 60Hz TV*) are required to record all luminance bytes for one channel for twenty-four hours without any mean vale data compression. In fact, the storage capacity actually required is lower because of transmission interruptions, advertisements and program repetitions.

Some steps of the invention can be summarised as follows:
a) generating a set of mean value bytes 22;
b) sending this set via a telephone line to the server means 1;
c) performing data identification/recognition;
d) according to the set of video data (movie) identified/recognised, collecting related additional information, e.g. the title and a complete set of mean value bytes 24;
e) sending the additional information to the recording device 5;
f) storing the title in an archive of the recording device 5;
g) comparing the set of video data 20 recorded in the recording device 5 with the received mean value bytes 24 for detecting the exact location of the start, the end and breaks of the recorded set of video data 20, and storing that information in the archive.

According to a further embodiment, a user programs the recording of a movie on the recording device 5, e.g. via a 'Naviclick' menu-controlled procedure or via 'Showview'. The movie will be broadcast later. The programming information is at least partly transmitted to the server means 1 (just) after programming, but before recording, e.g. via a telephone line. The server means 1 compare the received programming information with data in its program archive 4 to identify the movie broadcast later. If the movie is already known to the server means 1, e.g. a TV movie but not a live show, the provider means 1 send the set of mean value bytes 24 (one per frame) for the identified movie to the recorder means 5. When the recording starts at later time, the recording device 5 is able to compare incoming frames of video data with the mean value bytes 24 already received from the server means 1. Therefore, the recording device 5 is able to recognise the start time, the end time and breaks of the transmitted movie. In this case, the recording device 5 will record only the movie itself without any end of a previous TV transmission or start of a following TV transmission or advertisements. That will minimise memory capacity requirements. Even a delayed TV transmission, e.g. a delay by one hour, could be recorded without problems.

If the server means 1 does not contain the mean value bytes of the movie programmed by the user, which could be true for a live show for example, the server means 1 will send at least the name of the movie and perhaps additional information related to the movie, e.g. the name of the director, the name of the producer, et cetera, to provide minimum support to the recorder means 5.

It is an advantage of the invention that a complete archive of the video data recorded in the recording device 5 can be generated. Even information about sets of video data 20 already recorded can be added to the archive.

The invention can be implemented with minor additional costs for the user, because the telephone costs for the data transmission between the recording device 5 and the server means 1 are low (less than one minute of phone connection). Only a modem, a line connection from the recording device 5 to a local phone and some additional integrated circuits are necessary.
If the recording device 5 is part of a homenet already containing a modem, the recording device 5 could use this homenet modem.

## Claims

1. Method for automatically identifying or recognising a recorded video sequence (20) and for automatically providing additional information related to said recorded video sequence, the method including the steps:
- generating in a recording device (5) from data of said recorded video sequence a set (22) of mean values that are characteristic for frames or fields of said recorded video sequence (20);
- sending said set of mean values from said recording device to server means (1);
- receiving in said recording device (5) from said server means (1) additional data that were stored (3) in said server means and that are related to an identification or a recognition of said recorded video sequence, which additional data were generated in said server means by comparing (2) said set of mean values with corresponding data derived from video sequences known (4) at server means side, and upon identification or recognition of said set of mean values as belonging to a specific one of said known video sequences;
- storing (6), using said recording device, said additional data in connection with said recorded video sequence (20).

2. Method for automatically identifying or recognising a recorded video sequence (20) and for automatically providing additional information related to said recorded video sequence, the method including the steps:
- receiving in server means (1) from a recording device (5) a set (22) of mean values that were generated from data of said recorded video sequence and that are char acteristic for frames or fields of said recorded video sequence;
- comparing (2) in said server means said received set of mean values with corresponding data derived from video sequences known (4) at server means side;
- upon identifying or recognising said set of mean values as belonging to a specific one of said known video sequences, sending additional data that are stored (3) in said server means and that are related to the identified or recognised recorded video sequence from said server means to said recording device for storage (6) of said additional data in connection with said recorded video sequence.

3. Method for automatically identifying or recognising a recorded video sequence (20) and for automatically providing additional information related to said recorded video sequence, the method including the steps:
- generating in a recording device (5) from data of said recorded video sequence a set (22) of mean values that are characteristic for frames or fields of said recorded video sequence (20);
- sending said set of mean values from said recording device to server means (1);
- comparing (2) in said server means the received set of mean values with corresponding data derived from video sequences known (4) at server means side;
- upon identifying or recognising said set of mean values as belonging to a specific one of said known video sequences, sending additional data that are stored (3) in said server means and that are related to the identified or recognised recorded video sequence from said server means to said recording device;
- storing (6), using said recording device, said additional data in connection with said recorded video sequence (20).

4. Method according to one of claims 1 to 3, wherein each of said mean values is a luminance brightness mean value or colour component saturation mean value for the pixel values of a frame or a field of said recorded video sequence.

5. Method according to claim 4, wherein the pixel values of the upper half only of a frame or field are used for calculating one of said mean values.

6. Method according to one of claims 1 to 5, wherein said additional data includes the title of said identified or recognised recorded video sequence.

7. Method according to one of claims 1 to 6, wherein said additional data includes a corresponding mean value for each frame or field of the identified or recognised recorded video sequence, which received mean values are used in said recording device (5) for comparison with corresponding mean values of said recorded video sequence in order to automatically determine the exact begin, end and/or interruption periods for said recorded video sequence.

8. Method according to claim 7, wherein the received additional information is used in said recording device (5) to optimise storage of video data of said recorded video sequence in said storage means (6).

## Patentansprüche

1. Verfahren zum automatischen Identifizieren oder Erkennen einer aufgezeichneten Videosequenz (20) und zur automatischen Lieferung von zusätzlichen, auf die aufgezeichnete Videosequenz bezogenen Informationen, **gekennzeichnet durch** die Schritte:
- Erzeugen einer Gruppe (22) von Mittelwerten, die charakteristisch für Vollbilder oder Halbbilder der aufgezeichneten Videosequenz (20) sind, aus Daten der aufgezeichneten Videosequenz in einem Aufzeichnungsgerät (5) ;
- Senden der Gruppe von Mittelwerten von dem Aufzeichnungsgerät an Server-Mittel (1);
- Empfangen von zusätzlichen Daten in dem Aufzeichnungsgerät (5) von den Server-Mitteln (1), die in den Server-Mitteln gespeichert (3) waren, und die auf eine Identifizierung oder eine Erkennung der aufgezeichneten Videosequenz bezogen sind, wobei die zusätzlichen Daten in den Server-Mitteln erzeugt wurden durch Vergleichen (2) der Gruppe von Mittelwerten mit entsprechenden Daten, die von auf der Server-Mittelseite bekannten (4) Videosequenzen abgeleitet wurden, und bei Identifizierung oder Erkennung der Gruppe von Mittelwerten als zu einer spezifischen der bekannten Videosequenzen gehörend;
- Speichern (6) der zusätzlichen Daten in Verbindung mit der aufgezeichneten Videosequenz (20) unter Verwendung des Aufzeichnungsgerätes.

2. Verfahren zum automatischen Identifizieren oder Erkennen einer aufgezeichneten Videosequenz (20) und zur automatischen Lieferung von zusätzlichen, auf die aufgezeichnete Videosequenz bezogenen Informationen, **gekennzeichnet durch** die Schritte:
- Empfangen in Server-Mitteln (1) aus einem Aufzeichnungsgerät eine Gruppe (22) von Mittelwerten, die aus Daten der aufgezeichneten Videosequenz erzeugt wurden, und die charakteristisch für Vollbilder oder Halbbilder der aufgezeichneten Videosequenz sind;
- Vergleichen (2) der empfangenen Gruppe von Mittelwerten in den Server-Mitteln mit entsprechenden Daten, die von auf der Server-Mittelseite bekannten (4) Videosequenzen abgeleitet wurden;
- bei Identifizierung oder Erkennung der Gruppe von Mittelwerten als zu einer spezifischen der bekannten Videosequenzen gehörend, Senden von zusätzlichen Daten, die in den Server-Mitteln gespeichert (3) sind und die auf die auf die identifizierten oder erkannten aufgezeichneten Videosequenz bezogen sind, von den Server-Mitteln zu dem Aufzeichnungsgerät zum Speichern (6) der zusätzlichen Daten in Verbindung mit der aufgezeichneten Videosequenz.

3. Verfahren zum automatischen Identifizieren oder Erkennen einer aufgezeichneten Videosequenz (20) und zur automatischen Lieferung von zusätzlichen, auf die aufgezeichnete Videosequenz bezogenen Informationen, **gekennzeichnet durch** die Schritte:
- Erzeugen einer Gruppe (22) von Mittelwerten, die charakteristisch für Vollbilder oder Halbbilder der aufgezeichneten Videosequenz (20) sind, aus Daten der aufgezeichneten Videosequenz in einem Aufzeichnungsgerät (5) ;
- Senden der Gruppe von Mittelwerten von dem Aufzeichnungsgerät zu Server-Mitteln (1);
- Vergleichen (2) der empfangenen Gruppe von Mittelwerten mit entsprechenden Daten, die von auf der Server-Mittelseite bekannten (4) Videosequenzen abgeleitet sind, in den Server-Mitteln;
- bei Identifizierung oder Erkennung der Gruppe von Mittelwerten als zu einer spezifischen der bekannten Videosequenzen gehörend: Senden von zusätzlichen Daten, die in den Server-Mitteln gespeichert (3) sind, und die auf die identifizierte oder erkannte aufgezeichnete Videosequenz bezogen sind, von den Servermitteln zu dem Aufzeichnungsgerät;
- Speichern (6) der zusätzlichen Daten in Verbindung mit der aufgezeichneten Videosequenz (20) unter Verwendung des Aufzeichnungsgerätes.

4. Verfahren nach einem der Ansprüche 1 bis 3, bei dem jeder Mittelwert ein Luminanz-Helligkeits-Mittelwert oder ein Farbkomponenten-Sättigungs-Mittelwert für die Pixelwerte eines Vollbildes oder eines Halbbildes der aufgezeichneten Videosequenz ist.

5. Verfahren nach Anspruch 4, bei dem die Pixelwerte nur der oberen Hälfte eines Vollbildes oder Halbbildes für die Berechnung eines der Mittelwerte verwendet werden.

6. Verfahren nach einem der Ansprüche 1 bis 5, bei dem die zusätzlichen Daten den Titel der identifizierten oder erkannten aufgezeichneten Videosequenz enthalten.

7. Verfahren nach einem der Ansprüche 1 bis 6, bei dem die zusätzlichen Daten einen entsprechenden Mittelwert für jedes Vollbild oder Halbbild der identifizierten oder erkannten aufgezeichneten Videosequenz enthalten, wobei die empfangenen Mittelwerte in dem Aufzeichnungsgerät (5) zum Vergleich mit entsprechenden Mittelwerten der aufgezeichneten Videosequenz verwendet werden, um automatisch die genauen Anfangs-, End- und/oder Unterbrechungsperioden für die aufgezeichnete Videosequenz zu bestimmen.

8. Verfahren nach Anspruch 7, bei dem die empfangenen zusätzlichen Informationen in dem Aufzeichnungsgerät (5) dazu verwendet werden, die Speicherung von Videodaten der aufgezeichneten Videosequenz in den Speichermitteln (6) zu optimieren.

## Revendications

1. Procédé d'identification et de reconnaissance automatique d'une séquence vidéo enregistrée (20) et de fourniture automatique d'informations supplémentaires relatives à ladite séquence vidéo enregistrée, le procédé incluant les étapes suivantes :
- générer dans un dispositif d'enregistrement (5), à partir de données de ladite séquence vidéo enregistrée, un ensemble (22) de valeurs moyennes caractéristiques aux trames ou champs de ladite séquence vidéo enregistrée (20) ;
- envoyer ledit ensemble de valeurs moyennes dudit dispositif d'enregistrement au serveur (1) ;
- recevoir dans ledit dispositif d'enregistrement (5) à partir dudit serveur (1) des données supplémentaires qui ont été stockées (3) dans ledit serveur et qui concernent une identification ou une reconnaissance de ladite séquence vidéo enregistrée, lesquelles données supplémentaires ont été générées dans ledit serveur en comparant (2) ledit ensemble de valeurs moyennes à des données correspondantes dérivées de séquences vidéo connues (4) au niveau du serveur, et après l'identification ou la reconnaissance dudit ensemble de valeurs moyennes comme appartenant à une séquence spécifique desdites séquences vidéo connues ;
- stocker (6), à l'aide dudit dispositif d'enregistrement, lesdites données supplémentaires concernant ladite séquence vidéo enregistrée (20).

2. Procédé d'identification ou de reconnaissance automatique d'une séquence vidéo enregistrée (20) et de fourniture automatique d'informations supplémentaires concernant ladite séquence vidéo enregistrée, le procédé incluant les étapes suivantes:
- recevoir dans le serveur (1), à partir d'un dispositif d'enregistrement (5), un ensemble (22) de valeurs moyennes qui ont été générées à partir de données de ladite séquence vidéo enregistrée et qui sont caractéristiques aux trames ou champs de ladite séquence vidéo enregistrée (20) ;
- comparer (2) dans ledit serveur ledit ensemble de valeurs moyennes reçu à des données correspondantes dérivées de séquences vidéo connues (4) au niveau du serveur ;
- après l'identification ou la reconnaissance dudit ensemble de valeurs moyennes comme appartenant à une séquence spécifique desdites séquences vidéo connues, envoyer des données supplémentaires qui sont stockées (3) dans ledit serveur et qui concernent la séquence vidéo enregistrée identifiée ou reconnue dudit serveur audit dispositif d'enregistrement pour un stockage (6) desdites données supplémentaires concernant ladite séquence vidéo enregistrée.

3. Procédé d'identification ou de reconnaissance automatique d'une séquence vidéo enregistrée (20) et de fourniture automatique d'informations supplémentaires concernant ladite séquence vidéo enregistrée, le procédé incluant les étapes suivantes :
- générer dans un dispositif d'enregistrement (5), à partir de données de ladite séquence vidéo enregistrée, un ensemble (22) de valeurs moyennes caractéristiques aux trames ou champs de ladite séquence vidéo enregistrée (20) ;
- envoyer ledit ensemble de valeurs moyennes dudit dispositif d'enregistrement au serveur (1) ;
- comparer (2) dans ledit serveur l'ensemble de valeurs moyennes reçu à des données correspondantes dérivées de séquences vidéo connues (4) au niveau du serveur ;
- après l'identification ou la reconnaissance dudit ensemble de valeurs moyennes comme appartenant à une séquence spécifique desdites séquences vidéo connues, envoyer des données supplémentaires qui sont stockées (3) dans ledit serveur et qui concernent la séquence vidéo enregistrée identifiée ou reconnue dudit serveur audit dispositif d'enregistrement;
- stocker (6), à l'aide dudit dispositif d'enregistrement, lesdites données supplémentaires concernant ladite séquence vidéo enregistrée (20).

4. Procédé selon une des revendications 1 à 3, où chacune desdites valeurs moyennes est une valeur moyenne de luminosité ou une valeur moyenne de saturation de composante de couleur pour les valeurs de pixels d'une trame ou d'un champ de ladite séquence vidéo enregistrée.

5. Procédé selon la revendication 4, où les valeurs de pixels de la moitié supérieure uniquement d'une trame ou d'un champ sont utilisées pour calculer une desdites valeurs moyennes.

6. Procédé selon une des revendications 1 à 5, où lesdites données supplémentaires incluent le titre de ladite séquence vidéo enregistrée identifiée ou reconnue.

7. Procédé selon une des revendications 1 à 6, où lesdites données supplémentaires incluent une valeur moyenne correspondante pour chaque trame ou champ de la séquence vidéo enregistrée reconnue ou identifiée, lesquelles valeurs moyennes reçues sont utilisées dans ledit dispositif d'enregistrement (5) pour une comparaison aux valeurs moyennes correspondantes de ladite séquence vidéo enregistrée afin de déterminer automatiquement le début, la fin et/ou les périodes d'interruption exacts de ladite séquence vidéo enregistrée.

8. Procédé selon la revendication 7, où les informations supplémentaires reçues sont utilisées dans ledit dispositif d'enregistrement (5) afin d'optimiser le stockage des données vidéo de ladite séquence vidéo enregistrée dans ledit moyen de stockage (6).
